# EUROPEAN PATENT SPECIFICATION

(11) **EP 1 055 075 B1**
(45) Date of publication and mention of the grant of the patent: **10.12.2003**
(21) Application number: 99905063.6
(22) Date of filing: 15.02.1999
(51) Int. Cl.: F16B 19/10

(54) **BLIND RIVET CONNECTOR**
BLINDNIETARTIGES VERBINDUNGSELEMENT
CONNECTEUR A RIVET AVEUGLE

(30) Priority: 18.02.1998 GB 9803314
(43) Date of publication of application: 29.11.2000
(73) Proprietor: BAE SYSTEMS plc, Farnborough, Hampshire GU14 6YU (GB)
(72) Inventor: BROWN, David Martyn, Nr. Chester, Clwyd CH4 0DR (GB)
(86) International application number: GB9900478
(87) International publication number: WO99042734

(56) References cited:
- DE-B- 1 286 812
- FR-A- 2 721 967
- US-A- 4 919 578

## Description

This invention relates to blind rivet connectors and in particular, but not exclusively, to blind internally threaded rivets otherwise known as rivet nuts or "rivnuts".

There are many situations where it is required to provide a panel or the like with a captive nut so the panel can be assembled in place relative to the surrounding structure using a threaded connector such as a bolt or screw. However a problem arises where access is available to one side only of the component and where the other side is not accessible or should not be perforated by an access hole. This is the case, for example where a component has been made by a super-plastic forming process which results in the component being made up of a series of closed cells.

Thus it is already known to make a hole in the sheet on one side of the panel and to insert therein a rivnut which is subsequently compressed using a mandrel so that it crimps intimately around the periphery of the hole thus preventing its withdrawal therefrom. However a problem arises in such arrangements because they do not allow axial or radial float and thus location and alignment of such panels during assembly is problematic. Therefore a need exists for an arrangement which allows a limited amount of radial and/or axial float to overcome the problems mentioned above, without requiring additional intrusion and machining.

FR-A-2721967 and DE-B-1286812 both disclose blind rivets connecting two components together and using a non deformable collar around the rivet to prevent the components from being gripped too tightly by the rivet, whereby some radial play may take place , but no internal releasable engagement configuration within the meaning of appended claim 1 is present. Conversely, a nut connector permitting some radial float is known, for example, from US-A- 4 919 578 which, however, discloses no resilient peripheral region adjacent the head region of the connector.

Accordingly, this invention provides a blind rivet connector for being passed through a bore of a pre-determined diameter in a workpiece and clinched to prevent withdrawal, said connector comprising:
an enlarged reaction head portion for being retained by the workpiece surface to one side of the bore;
a tubular portion capable of passing through said bore and including:-
   remote from said head portion an end portion incorporating an internal releasable engagement configuration, a plastically deformable region intermediate said end portion and said head portion, and
   a resilient peripheral region adjacent said head region,
   whereby, in use, the application of compression to clinch said connector causes said plastically deformable region to deform plastically, and said resilient peripheral region is dimensioned to allow plastic deformation sufficient to prevent later removal of said connector but to prevent the connector from crimping intimately around the periphery of the bore whereby the connector will be capable of limited radial float relative to said bore.

By this arrangement, float is achieved by preventing the rivnut from crimping intimately around the periphery of the bore. Thus limited amounts of radial float (and axial float if required) are achieved although the clinching of the connector still provides sufficient excrescence of material to prevent withdrawal of the connector when clinched.

Whilst the resilient peripheral region may be provided by means of locally thickening and/or locally hardening the material, the resilient peripheral region preferably comprises a separate relatively non-deformable collar of diameter less than that of the bore but of equal or greater axial dimension.

The rivet can incorporate various types of internal releasable engagement configuration, but it is preferred for the connector to incorporate an internal thread.

In another embodiment, this invention provides an internally threaded blind rivet nut including adjacent the clinchable region thereof a resilient collar or peripheral region dimensioned such that in use, when said rivet nut is clinched it is capable of limited axial and/or radial float.

The invention also extends to an assembly comprising at least two components connected by means of the connector or rivet nut as described above.

The invention may be performed in various ways, and an embodiment thereof will now be described in detail, reference being made to the accompanying drawings, in which:-
Figure 1 is a schematic side view showing a rivet connector of this invention prior to clinching;
Figure 2 is a schematic side view of the connector of Figure 1 after clinching, and
Figure 3 is a schematic side view of a second embodiment of connector after clinching.

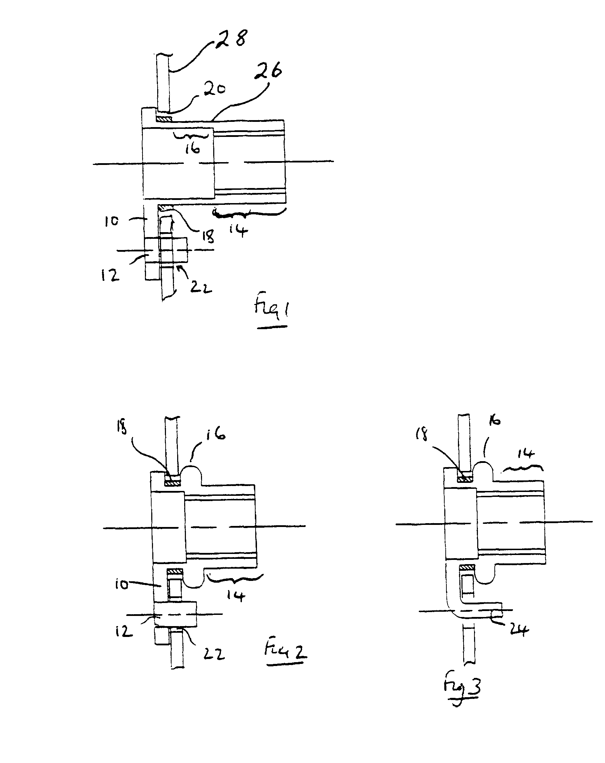

Referring to Figures 1 and 2, the rivet connector comprises a faceplate or reaction head 10 having an anti-rotation pin 12. A body of the rivet connector forms a generally tubular portion 26, comprising an internally releasable engagement configuration in the form of an internally threaded end portion 14 and a local plastically deformable region 16 intermediate the threaded end portion 14 and the faceplate 10. The rivet connector is modified by means of a resilient peripheral region in the form of a hard, substantially non-deformable collar 18 which fits snugly around the outside of the tubular portion 26, adjacent the face plate 10. The outer diameter of the collar 18 and its axial dimension are selected to be slightly less and slightly greater respectively than the diameter of the rivet body and the material thickness of a bore of the hole 20 through an associated component 28 through which the rivet connector is to be passed. The associated component 28 also includes adjacent the hole 20 a smaller non-rotation hole 22 which receives the pin 12 of the faceplate 10. This arrangement may however be modified as required; for example, as shown in Figure 3, the pin 12 may be replaced by an integrally formed tang 24.

In use, once the rivet connector has been placed into position as seen in Figure 1, a threaded mandrel (not shown) is screwed into engagement with the threaded portion 14 and a tensile force applied which is reacted by the faceplate 10 of the rivet connector thereby to compress the plastically deformable region 16 to cause it to bulge out and clinch. As seen in Figure 2 the clinching is controlled by the presence of the collar 18 so that the excrescent material does not foul the periphery of the hole 20 so that, after clinching, the connector has limited axial and radial float.

## Claims

1. A blind rivet connector for being passed through a bore (20) of a pre-determined diameter in a workpiece (28) and clinched to prevent withdrawal, said connector comprising:
an enlarged reaction head portion (10) for being retained by the workpiece (28) surface to one side of the bore (20);
a tubular portion (26) capable of passing through said bore (20) and including:-
remote from said head portion (10) an end portion (14) incorporating an internal releasable engagement configuration,
a plastically deformable region (16) intermediate said end portion and said head portion, and
a resilient peripheral region (18) adjacent said head region (10),
whereby, in use, the application of compression to clinch said connector causes said plastically deformable region (16) to deform plastically, and said resilient peripheral region (18) is dimensioned to allow plastic deformation sufficient to prevent later removal of said connector but to prevent the connector from crimping intimately around the periphery of the bore (20) whereby the connector will be capable of limited radial float relative to said bore.

2. A connector according to Claim 1 in which the resilient peripheral region (18) is dimensioned so that the connector will be capable of limited axial float relative to the bore.

3. A connector according to Claim 2, wherein said resilient peripheral region comprises a separate relatively non-deformable collar (18) of diameter less than said bore (20) and axial dimension equal or greater than that of said bore.

4. A connector according to any preceding Claim, wherein said internal releasable engagement configuration comprises an internally screw-threaded portion (14).

5. A connector according to any preceding Claim including an anti-rotation tang (24) for engagement with the component (28).

6. An assembly comprising a component (28) having a rivet connector according to any preceding Claim inserted therein.

7. An assembly comprising two components (28) interconnected by means of a rivet connector according to any of Claims 1 to 5.

## Patentansprüche

1. Blindnietverbinder, der durch eine Bohrung (20) vorbestimmten Durchmessers in einem Werkstück (28) gesteckt und aufgeweitet wird, um ein Herausziehen zu verhindern, wobei der Verbinder die folgenden Teile aufweist:
- einen vergrößerten Reaktionskopfteil (10), der auf einer Seite der Bohrung (20) vom Werkstück (28) abgestützt wird;
- einen hülsenartigen Teil (26), der durch die Bohrung (20) gesteckt wird und folgende Merkmale aufweist:
- einen Endabschnitt (14) an dem dem Kopfteil (10) entgegengesetzten Ende weist eine innere lösbare Eingriffskonfiguration auf;
- ein plastisch deformierbarer Bereich (16) befindet sich zwischen dem Endabschnitt und dem Kopfteil und
- einen elastischen Umfangsbereich (18) benachbart zum Kopfteil (10),
- wobei im Gebrauch die Anwendung eines Kompressionsdrucks zur Aufweitung des Verbinders den plastisch deformierbaren Bereich (16) plastisch deformiert, und der elastische Umfangsbereich (18) so dimensioniert ist, daß die plastische Deformation ausreicht, um eine spätere Entfernung des Verbinders zu verhindern, aber verhindert, daß der Verbinder über den Umfang der Bohrung (20) intensiv derart aufgeweitet wird, derart, daß der Verbinder in der Lage ist, sich begrenzt radial relativ zur Bohrung zu verschieben.

2. Verbinder nach Anspruch 1, bei welchem der elastische Umfangsbereich (18) so dimensioniert ist, daß der Verbinder in der Lage ist, sich begrenzt axial relativ zur Bohrung zu verschieben.

3. Verbinder nach Anspruch 2, bei welchem der elastische Umfangsbereich einen getrennten, relativ undeformierbaren Kragen (18) mit einem Durchmesser aufweist, der kleiner ist, als der Durchmesser der Bohrung (20), während die axiale Abmessung gleich oder größer ist, als die axiale Abmessung der Bohrung.

4. Verbinder nach einem der vorhergehenden Ansprüche, bei welchem die innere lösbare Eingriffskonfiguration einen Innengewindeabschnitt (14) aufweist.

5. Verbinder nach einem der vorhergehenden Ansprüche, welcher ein Drehverhinderungsglied (24) zum Eingriff an der Komponente (28) aufweist.

6. Aufbau mit einer Komponente (28), der einen Nietverbinder nach einem der vorhergehenden Ansprüche darin eingesetzt aufweist.

7. Aufbau mit zwei Komponenten (28), die mittels eines Nietverbinders nach einem der Ansprüche 1 bis 5 miteinander verbunden sind.

## Revendications

1. Un connecteur à rivet aveugle destiné à être passé au travers d'un alésage (20) d'un diamètre prédéterminé dans une pièce à usiner (28) et rivé pour empêcher le retrait, ledit connecteur comportant :
une portion de tête de réaction agrandie (10) destinée à être retenue par la surface de la pièce à usiner (28) sur un côté de l'alésage (20) ;
une portion tubulaire (26) capable de passer au travers dudit alésage (20) et comprenant :
à distance de ladite portion de tête (10), une portion d'extrémité (14) incorporant une configuration de mise en prise libérable interne,
une zone déformable de façon plastique (16) intermédiaire entre ladite portion d'extrémité et ladite portion de tête, et
une zone périphérique résiliente (18) adjacente à ladite zone de tête (10),
grâce auxquelles, à l'utilisation, l'application de compression pour river ledit connecteur amène ladite zone déformable de façon plastique (16) à se déformer de façon plastique, et ladite zone périphérique résiliente (18) est dimensionnée pour permettre une déformation plastique suffisante pour empêcher l'enlèvement ultérieur dudit connecteur mais pour empêcher le sertissage étroit du connecteur autour de la périphérie de l'alésage (20), grâce à quoi le connecteur sera capable de flottement radial restreint relativement audit alésage.

2. Un connecteur selon la revendication 1 dans lequel la zone périphérique résiliente (18) est dimensionnée de façon à ce que le connecteur soit capable de flottement axial restreint relativement à l'alésage.

3. Un connecteur selon la revendication 2, dans lequel ladite zone périphérique résiliente comporte un collier distinct relativement non déformable (18) de diamètre inférieur audit alésage (20) et de dimension axiale égale ou supérieure à celle dudit alésage.

4. Un connecteur selon n'importe quelle revendication précédente, dans lequel ladite configuration de mise en prise libérable interne comporte une portion à filetage de vis interne (14).

5. Un connecteur selon n'importe quelle revendication précédente comprenant un tenon anti-rotation (24) destiné à se mettre en prise avec le composant (28).

6. Un assemblage comportant un composant (28) ayant, inséré dans celui-ci, un connecteur à rivet selon n'importe quelle revendication précédente.

7. Un assemblage comportant deux composants (28) connectés entre eux au moyen d'un connecteur à rivet selon n'importe lesquelles des revendications 1 à 5.
